# EUROPÄISCHE PATENTSCHRIFT

(11) **EP 0 541 921 B1**
(45) Veröffentlichungstag und Bekanntmachung des Hinweises auf die Patenterteilung: **17.05.1995**
(21) Anmeldenummer: 92114901.9
(22) Anmeldetag: 01.09.1992
(51) Int. Cl.: A01C 7/12

(54) **Dosiervorrichtung für eine Sämaschine**
Dosing device for a seed drill
Dispositif de dosage pour un semoir

(30) Priorität: 09.11.1991 DE 9113968 U
(43) Veröffentlichungstag der Anmeldung: 19.05.1993
(73) Patentinhaber: Rabewerk GmbH + Co., 49152 Bad Essen (DE)
(72) Erfinder: Gehrke, Rudolf, Dipl.-Ing., W-2990 Aschendorf (DE)
(74) Vertreter: Missling, Arne, Dipl.-Ing.

(56) Entgegenhaltungen:
- EP-A- 0 209 063
- EP-A- 0 210 516
- CA-A- 1 149 235
- DE-A- 3 429 817
- GB-A- 964 279

## Beschreibung

Die Erfindung bezieht sich auf eine Dosiervorrichtung für eine Sämaschine, mit einer in einem Gehäuse gelagerten Säwelle und einem Feinsärad und zumindest einem Normalsärad, welche auf der Säwelle gelagert und wahlweise mittels einer Rastvorrichtung drehbar mit der Säwelle koppelbar sind.

Aus der DE-PS 837 022 ist eine solche Dosiervorrichtung mit einem Normalsärad und einem Feinsärad vorbekannt. Die beiden Säräder sind nebeneinander in einem Gehäuse angeordnet, welches Teil eines Saatgutkastens ist. Das Feinsärad ist stets mit der Säwelle gekoppelt, während das Normalsärad wahlweise durch Verschieben eines Bolzens mit dem Feinsärad und damit auch mit der Säwelle gekoppelt werden kann. Im ersteren Falle steht das Normalsärad, da dieses durch den Bolzen mit dem Gehäuse verrastet ist, still, so daß sich nur das Feinsärad dreht. Bei Verwendung des Normalsärades sind jedoch beide Säräder in Drehbewegung. Dies hat den Nachteil, daß die ausgebrachte Saatgutmenge nicht mit befriedigender Genauigkeit dosiert werden kann, da zusätzlich zu dem eigentlich benötigten Normalsärad stets auch das Feinsärad in Betrieb ist. Dies führt, da üblicherweise das Feinsärad nicht zum Transport von Saatgut, beispielweise Getreide üblicher Größe, verwendbar ist, zu einer zusätzlichen Bewegung und Umwälzung des Saatgutes in dem Saatgutkasten. Weiterhin wird das Saatgut durch das Feinsärad beschädigt, da seine Oberfläche etwas angemahlen wird.

Eine ähnliche Ausgestaltungsform ist aus der DE-OS 3525091 vorbekannt, auch dort sitzt das Feinsärad fest auf der Säwelle, während das Normalsärad wahlweise zusätzlich zugeschaltet werden kann.

Der Erfindung liegt die Aufgabe zugrunde eine Dosiervorrichtung der eingangs genannten Art zu schaffen, welche bei einfachem Aufbau und einfacher Handhabbarkeit die wahlweise Benutzung entweder des Feinsärades oder des Normalsärades ermöglicht.

Erfindungsgemäß wird die Aufgabe dadurch gelöst, daß an der Säwelle drehfest eine Kupplungsscheibe befestigt ist, welche sich radial zwischen dem Feinsärad und dem Normalsärad erstreckt, daß sowohl das Feinsärad als auch das Normalsärad frei drehbar auf der Säwelle gelagert sind und daß die Rastvorrichtung zwischen der Scheibe und den Särädern wirkend angeordnet ist.

Die erfindungsgemäße Dosiervorrichtung zeichnet sich durch eine Reihe erheblicher Vorteile aus. Da erfindungsgemäß sowohl das Feinsärad als auch das Normalsärad frei drehbar auf der Säwelle gelagert sind, ist es möglich, alternativ nur eines dieser beiden Säräder antriebsmäßig mit der Säwelle zu koppeln, während das andere Särad an dem Gehäuse festgelegt werden kann. Hierdurch wird sichergestellt, daß das Saatgut nur durch das jeweils in Betrieb befindliche Särad transportiert wird, während das andere Särad gänzlich ohne Einfluß auf diesen Transportvorgang ist. Es werden somit sowohl unerwünschte Bewegungen des Saatgutes durch eine Drehung des jeweils nicht benutzten Särades vermieden, als auch Beschädigungen des Saatgutes durch ein Zusammenwirken mit dem nicht benötigten Särad.

In einer besonders günstigen Weiterbildung der Erfindung ist vorgesehen, daß die Rastvorrichtung zumindest zwei parallel zur Säwelle und zueinander fluchtend angeordnete Rastbolzen umfaßt, welche axial verschiebbar an jeweils einem der Säräder gelagert sind und wahlweise in die Kupplungsscheibe oder das Gehäuse einrastbar sind. Die Verwendung derartiger Rastbolzen weist den Vorteil auf, daß die Rastvorrichtung sehr einfach aufgebaut ist und sehr einfach bedient werden kann. Es sind zum Umschalten der Säräder weder spezielle Werkzeuge noch spezielle Kenntnisse nötig. Ein einfaches Verschieben der beiden Rastbolzen führt jeweils zur Blockierung eines der Säräder und zur Antriebsverbindung des anderen Särades mit der Säwelle.

Weiterhin kann es günstig sein, wenn der Rastbolzen mittels einer Einrastung in seiner jeweiligen Betriebsstellung feststellbar ist. Die Einrasteinrichtung verhindert, daß sich der Rastbolzen während des Betriebs der Sämaschine, beispielsweise durch Stösse oder Schwingungen, aus der vorbestimmten Position löst und zu einer Fehlfunktion der Dosiervorrichtung führt. Die Einrasteinrichtung kann eine in dem Särad gelagerte, federvorgespannte Kugel aufweisen, welche in einen Nut des Rastbolzens einbringbar ist. Durch geeignete Wahl der Federkonstante läßt sich eine ausreichend sichere Einrastung des Rastbolzens erzielen.

Zur Erleichterung der Bedienbarkeit der Dosiervorrichtung ist es weiterhin günstig, wenn das Gehäuse zur Axialverschiebung des Rastbolzens eine von der Außenseite des Gehäuses zugängliche Ausnehmung aufweist, in welche der Rastbolzen zur Sperrung des jeweiligen Särades wahlweise einschiebbar ist. Die Ausnehmung für den Rastbolzen kann vorteilhaft wesentlich größer als der Rastbolzen sein, wodurch das Verstellen wesentlich vereinfacht wird. Des weiteren ist es auch vorteilhaft, wenn der Rastbolzen von außen frei zugänglich ist.

Um bei Verwendung des Normalsärades die Leistungsfähigkeit der Dosiervorrichtung den jeweiligen Anforderungen noch besser anpassen zu können, kann es günstig sein, wenn nebeneinander zwei Normalsäräder auf der Säwelle gelagert sind, welche so koppelbar sind, daß entweder eines oder beide Normalsäräder in Drehung versetzt werden, während das Feinsärad stillsteht. Dies kann durch einen zusätzlichen Rastbolzen erfolgen, welcher in dem Gehäuse gelagert ist und das zweite, außenliegende Normalsärad wahlweise sperrt.

Um die Kupplungsscheibe mit ausreichender Festigkeit auf der Säwelle lagern zu können, ist erfindungsgemäß vorgesehen, daß die Kupplungsscheibe auf einer zylindrischen Hülse befestigt ist, welche wiederum drehfest auf der Säwelle gelagert ist. Hierdurch ergibt sich eine ausreichende Kippsicherheit der Kupplungsscheibe, weiterhin kann die zylindrische Hülse in einfacher Weise mit der Säwelle verbunden werden, beispielsweise über eine Keilnut oder ähnliches. Die zylindrische Hülse kann weiterhin bevorzugterweise als Gleitlager für diese Säräder dienen, wobei der größere Außendurchmesser der Hülse insbesondere hinsichtlich der Kippsicherheit des Säräder Vorteile gegenüber einer direkten Lagerung auf einer relativ klein dimensionierten Säwelle bietet.

Im folgenden wird die Erfindung anhand von Ausführungsbeispielen in Verbindung mit der Zeichnung beschrieben. Dabei zeigt:
- Fig. 1: eine Teil-Schnittansicht eines ersten Ausführungsbeispiels der erfindungsgemäßen Dosiervorrichtung,
- Fig. 2: eine Teil-Schnittansicht, ähnlich Fig. 1, eines weiteren Ausführungsbeispiels und
- Fig. 3: eine Seitenansicht, teils im Schnitt, des in Fig. 1 gezeigten Ausführungsbeispiels bei Blickrichtung links, bezogen auf die Darstellung der Fig. 1.

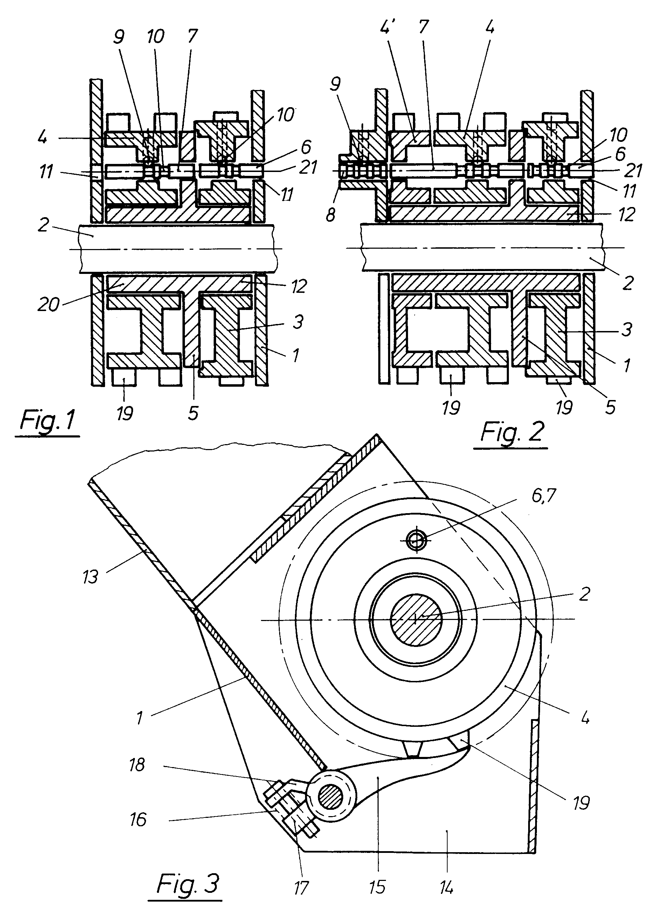

In Fig. 3 ist in der Seitenansicht, teils im Schnitt, ein Saatgutkasten 13 dargestellt, an dessen unterem Bereich ein Gehäuse 1 ausgerichtet ist, in welchem eine Säwelle 2 gelagert ist. An dem unteren Bereich 14 des Saatgutkasten 13 sind, wie üblich, Saatrohre angeordnet, welche jedoch nicht gezeichnet sind. Der Anschluß der Saatrohre erfolgt über Trichter, welche, wie aus dem Stand der Technik bekannt, an einer Schiene gelagert sind. Der Abfluß des Saatgutes erfolgt über eine abgefederte Klappe 15, wobei die Klappe 15 über eine zwischen einem festen Ansatz 18 und einem Ansatz 17 der Klappe 15 wirkende Druckfeder 16 vorgespannt ist.

Die Fig. 3 zeigt lediglich zwei Nocken 19 eines drehbar auf der Säwelle 2 gelagerten Normalsärades 4. Die Säräder sind in üblicher Weise ausgebildet und dimensioniert, um das Saatgut in dosierter Weise transportieren zu können.

Die Fig. 1 zeigt eine Schnittansicht eines ersten Ausführungsbeispiels der erfindungsgemäßen Dosiervorrichtung. Das Gehäuse 1 umfaßt zwei zueinander seitliche Wandungen, welche so beabstandet sind, daß zwischen den Wandungen die beiden Dosierräder, ein Feinsärad 3 und ein Normalsärad 4 angeordnet werden können. Die beiden Säräder lagern frei drehbar auf einer zylindrischen Hülse 12, welche mit der Säwelle drehfest verbunden ist. Die Hülse 12 wiederum ist einstückig mit einer Kupplungsscheibe 5 verbunden, welche sich zwischen den beiden Särädern 3 und 4 erstreckt. Die Befestigung der Kupplungsscheibe 5 bzw. der Hülse 12 kann mittels einer nur schematisch dargestellten Schraube 20 erfolgen.

Die beiden Säräder 3 und 4 weisen in einem Abstand von der Säwelle 2 jeweils zumindest eine Ausnehmung auf, welche auf einer Achse 21 ausgerichtet ist. In gleicher Weise sind die beiden seitlichen Wandungen des Gehäuses 1 jeweils mit einer Ausnehmung 11 versehen. Durch die fluchtend zueinander ausrichtbaren Ausnehmungen sind zwei Rastbolzen 6 und 7 durchgeführt, welche in ihrer Länge so bemessen sind, daß durch seitliches Verschieben der beiden Rastbolzen 6 und 7 zwei Schaltzustände erreichbar sind, in welchen jeweils entweder das Feinsärad 3 oder das Normalsärad 4 mit der Kupplungsscheibe 5 gekoppelt sind, während das andere Särad durch Einschieben des jeweiligen Rastbolzens in die Ausnehmung 11 des Gehäuses 1 an dem Gehäuse 1 festgelegt ist. Durch einfaches Verschieben der beiden Rastbolzens, beispielsweise mittels eines Stiftes oder von Hand kann somit auf einfachste Weise eine Umschaltung zwischen dem Feinsärad und dem Normalsärad erfolgen. Das jeweils andere Särad ist während der Betriebsdauer des anderen Särades nicht drehbar an dem Gehäuse 1 gelagert, so daß Beeinflussungen des Saatgutes oder des Transportvorganges ausscheiden.

Aus oben stehenden Ausführungen ergibt sich, daß mittels eines einzigen Handgriffs, d. h. lediglich durch Verschiebung der beiden Rastbolzen 6 und 7 ein zuverlässiges Umschalten von einem Särad auf das andere erfolgt, während gleichzeitig das jeweils andere Särad blockiert wird. Hierdurch wird erfindungsgemäß ein hohes Maß an Betriebssicherheit bei hohem Bedienungskomfort gewährleistet.

Bei dem in Fig. 1 gezeigten Ausführungsbeispiel ist die Kupplungsscheibe 5 zwischen den beiden Särädern 3 und 4 von außen sichtbar und ragt in den Innenraum des Gehäuses 1. Alternativ hierzu ist es auch möglich, die radialen Abmessungen der Kupplungsscheibe 5 zu verringern und die beiden Säräder so auszubilden, daß diese direkt aneinandergrenzen und somit die Kupplungsscheibe 5 verdecken.

Die beiden Rastbolzen 6 und 7 weisen jeweils zwei Nuten 10 auf, welche den jeweiligen Endstellungen entsprechen. In den Särädern 3 und 4 sind jeweils federvorgespannte Kugeln 9 gelagert, welche ein Einrasten der Rastbolzen 6 und 7 in der jeweiligen Schaltstellung sicherstellen.

Das in Fig. 2 gezeigte Ausführungsbeispiel unterscheidet sich von dem Ausführungsbeispiel gemäß Fig. 1 dadurch, daß ein zusätzliches Normalsärad 4' vorgesehen ist. Die Dosiervorrichtung bietet somit die Möglichkeit, entweder das Feinsärad 3 oder eines oder beide der Normalsäräder 4 bzw. 4' in Betrieb zu nehmen. Aus diesem Grunde weisen die beiden Rastbolzen 6 und 7 jeweils drei Nuten 10 auf, da insgesamt drei Schaltstellungen möglich sind. Zusätzlich ist an dem Gehäuse 1 ein zusätzlicher Rastbolzen 8 gelagert, welcher ebenfalls mittels einer federvorgespannten Kugel 9 in seiner Position gehalten wird und ebenfalls insgesamt drei Nuten 10 aufweist. Bei der in Fig. 2 gezeigten Schaltstellung ist das Feinsärad 3 mittels des Rastbolzens 6 an dem Gehäuse 1 festgelegt und dreht sich somit nicht, während der Rastbolzen 7 die beiden Normalsäräder 4 und 4' mit der Kupplungsscheibe 5 kuppelt. Bei einer Verschiebung der gesamten Anordnung der 6 bis 8 um eine Schaltstellung nach rechts bleibt das Feinsärad 3 weiterhin gehäusefest gesperrt, während der Rastbolzen 8 das Normalsärad 4' gehäusefest verriegelt. Lediglich das mittlere Normalsärad 4 ist dann über den Bolzen 7 mit der Kupplungsscheibe 5 verbunden und dreht sich somit zusammen mit der Säwelle 2.

Die Erfindung ist nicht auf die gezeigten Ausführungsbeispiele beschränkt, vielmehr ergeben sich im Rahmen der Ansprüche vielfältige Abwandlungs- und Modifikationsmöglichkeiten.

## Patentansprüche

1. Dosiervorrichtung für eine Sämaschine, mit einer in einem Gehäuse (1) gelagerten Säwelle (2), einem Feinsärad (3) und zumindest einem Normalsärad (4), welche auf der Säwelle (2) gelagert und wahlweise mittels einer Rastvorrichtung drehfest mit der Säwelle (2) koppelbar sind, dadurch gekennzeichnet, daß an der Säwelle (2) drehfest eine Kupplungsscheibe (5) befestigt ist, welche sich radial zwischen dem Feinsärad (3) und dem Normalsärad (4) erstreckt, daß sowohl das Feinsärad (3) als auch das Normalsärad (4) frei drehbar auf der Welle (2) gelagert sind und daß die Rastvorrichtung zwischen der Kupplungsscheibe (5) und den Särädern (3, 4) wirkend angeordnet ist.

2. Dosiervorrichtung nach Anspruch (1), dadurch gekennzeichnet, daß die Rastvorrichtung zumindest zwei parallel zur Säwelle (2) und zueinander fluchtend angeordnete Rastbolzen (6, 7) umfaßt, welche axial verschiebbar an jeweils einem der Säräder (3, 4) gelagert sind und wahlweise in die Kupplungsscheibe (5) einrastbar sind.

3. Dosiervorrichtung nach Anspruch 2, dadurch gekennzeichnet, daß der Rastbolzen (6, 7) mittels einer Einrasteinrichtung in seiner jeweiligen Betriebsstellung feststellbar ist.

4. Dosiervorrichtung nach Anspruch 3, dadurch gekennzeichnet, daß die Einrasteinrichtung eine in dem Särad (3, 4) gelagerte, federvorgespannte Kugel (9) umfaßt, welche in eine Nut (10) des Rastbolzens (6, 7) einbringbar ist.

5. Dosiervorrichtung nach einem der Ansprüche 1 bis 4, dadurch gekennzeichnet, daß das Gehäuse (1) zur Axialverschiebung des Rastbolzens (6, 7) eine von der Außenseite des Gehäuses (1) zugängliche Ausnehmung (11) aufweist, in welche der Rastbolzen (6, 7) zur Sperrung des jeweiligen Särades (3, 4) wahlweise einschiebbar ist.

6. Dosiervorrichtung nach einem der Ansprüche 1 bis 5, dadurch gekennzeichnet, daß zwei nebeneinander angeordnete Normalsäräder (4, 4') auf der Säwelle (2) gelagert sind.

7. Dosiervorrichtung nach Anspruch 6, dadurch gekennzeichnet, daß das zweite, außenliegende Särad (4') mittels eines Rastbolzens (8) sperrbar ist, welcher in dem Gehäuse (1) gelagert ist.

8. Dosiervorrichtung nach einem der Ansprüche 1 bis 7, dadurch gekennzeichnet, daß die Kupplungsscheibe (5) mit einer drehfest auf der Säwelle (2) gelagerten zylindrischen Hülse (12) verbunden ist.

9. Dosiervorrichtung nach Anspruch 8, dadurch gekennzeichnet, daß die zylindrische Hülse (12) ein Gleitlager für die Säräder (3, 4) bildet.

## Claims

1. A metering device for a sowing machine, having a sowing shaft (2) mounted in a housing (1), a fine sowing wheel (3) and at least one standard sowing wheel (4), these wheels (3, 4) being mounted on the sowing shaft (2) and being selectively couplable to the sowing shaft (2) in a rotationally-rigid manner by means of a locking device, characterised in that a clutch disc (5) is secured in a rotationally-rigid manner to the sowing shaft (2) and extends radially between the fine sowing wheel (3) and the standard sowing wheel (4), in that both the fine sowing wheel (3) and the standard sowing wheel (4) are mounted on the shaft (2) in a freely rotatable manner, and in that the locking device is operatively arranged between the clutch disc (5) and the sowing wheels (3, 4).

2. A metering device in accordance with Claim 1, characterised in that the locking device comprises at least two locking bolts (6, 7) which are arranged parallel to the sowing shaft (2) and in alignment with one another, are mounted in an axially displaceable manner on a respective sowing wheel (3, 4) and can be selectively engaged into the clutch disc (5).

3. A metering device in accordance with Claim 2, characterised in that the locking bolt (6, 7) can be fixed in its current operational position by means of an engaging device.

4. A metering device in accordance with Claim 3, characterised in that the engaging device comprises a ball (9) which is mounted in the sowing wheel (3, 4), is spring-tensioned and can be introduced into a groove (10) in the locking bolt (6, 7).

5. A metering device in accordance with any one of Claims 1 to 4, characterised in that the housing (1) has an opening (11) which is for axial displacement of the locking bolt (6, 7), is accessible from the exterior of the housing (1) and into which the locking bolt (6, 7) can selectively be pushed in order to block the respective sowing wheel (3, 4).

6. A metering device in accordance with any one of Claims 1 to 5, characterised in that two standard sowing wheels (4, 4') arranged side-by-side are mounted on the sowing shaft (2).

7. A metering device in accordance with Claim 6, characterised in that the second, outer sowing wheel (4') can be blocked by means of a locking bolt (8) mounted in the housing (1).

8. A metering device in accordance with any one of Claims 1 to 7, characterised in that the clutch disc (5) is connected to a cylindrical sleeve (12) mounted on the sowing shaft (2) in a rotationally-rigid manner.

9. A metering device in accordance with Claim 8, characterised in that the cylindrical sleeve (12) forms a sliding bearing for the sowing wheels (3, 4).

## Revendications

1. Dispositif de dosage pour un semoir, comportant un arbre de semoir (2), monté dans un carter (1), une roue pour semis fin (3) et au moins une roue pour semis normal (4), qui sont montées sur l'arbre de semoir (2) et que l'on peut, à volonté, au moyen d'un dispositif de blocage, accoupler à l'arbre de semoir (2) pour les en rendre solidaires en rotation,
caractérisé en ce que, sur l'arbre de semoir (2), est fixé, solidaire en rotation, un disque d'accouplement (5), s'étendant radialement entre la roue pour semis fin (3) et la roue pour semis normal (4),
en ce qu'aussi bien la roue pour semis fin (3) que la roue pour semis normal (4) sont montées sur l'arbre (2) en pouvant tourner librement,
et en ce que le dispositif de blocage est disposé pour agir entre le disque d'accouplement (5) et les roues de semoir (3, 4).

2. Dispositif de dosage suivant la revendication 1, caractérisé en ce que le dispositif de blocage comprend au moins deux tiges de blocage (6, 7), disposées dans l'alignement l'un de l'autre, parallèlement à l'arbre de semoir (2), ces tiges étant montées sur chacune des roues de semoir (3, 4) de façon à pouvoir coulisser axialement et à s'encliqueter, quand on le désire, dans le disque d'accouplement (5).

3. Dispositif de dosage suivant la revendication 2, caractérisé en ce que chacune des tiges de blocage (6,7) peut être fixée, au moyen d'un dispositif d'encliquetage, dans sa position de fonctionnement correspondante.

4. Dispositif de dosage suivant la revendication 3, caractérisé en ce que le dispositif d'encliquetage comprend une bille (9), montée dans la roue de semoir (3, 4) et précontrainte par un ressort, cette bille pouvant pénétrer dans une rainure (10) de la tige de blocage (6,7).

5. Dispositif de dosage suivant l'une des revendications 1 à 4, caractérisé en ce que le carter (1) présente un évidement (11), accessible depuis la face extérieure du carter (1), pour le coulissement axial de la tige de blocage (6,7), évidement dans lequel on peut, à volonté, introduire une tige de blocage (6,7) pour arrêter la roue de semoir correspondante (3, 4).

6. Dispositif de dosage suivant l'une des revendications 1 à 5, caractérisé en ce que deux roues pour semis normal (4, 4') sont montées côte-à-côte sur l'arbre de semoir (2).

7. Dispositif de dosage suivant la revendication 6, caractérisé en ce que la deuxième roue de semoir (4'), située à l'extérieur, peut être arrêtée au moyen d'une tige de blocage (8), montée dans le carter (1).

8. Dispositif de dosage suivant l'une des revendications 1 à 7, caractérisé en ce que le disque d'accouplement (5) est relié à une douille cylindrique (12), montée, solidaire en rotation, sur l'arbre de semoir (2).

9. Dispositif de dosage suivant la revendication 8, caractérisé en ce que la douille cylindrique (12) forme un palier lisse pour les roues de semoir (3, 4).
